# EUROPÄISCHE PATENTSCHRIFT

(11) **EP 1 693 098 B1**
(45) Veröffentlichungstag und Bekanntmachung des Hinweises auf die Patenterteilung: **22.08.2007**
(21) Anmeldenummer: 06101604.4
(22) Anmeldetag: 13.02.2006
(51) Int. Cl.: B01D 35/31, B01D 35/30

(54) **Filtereinrichtung**
Filter
Filtre

(30) Priorität: 15.02.2005 DE 102005007022
(43) Veröffentlichungstag der Anmeldung: 23.08.2006
(73) Patentinhaber: MANN+HUMMEL GmbH, 71638 Ludwigsburg (DE)
(72) Erfinder: Dworatzek, Klemens, 68535, Edingen (DE)

(56) Entgegenhaltungen:
- EP-A- 0 532 161
- US-A- 4 956 086
- US-A- 5 128 034
- US-A- 5 919 362
- US-A- 6 146 527
- US-A1- 2004 144 710

## Beschreibung

### Technisches Gebiet

Die Erfindung betrifft eine Filtereinrichtung nach dem Oberbegriff des unabhängigen Anspruchs 1.

### Stand der Technik

Aus der US 2002 / 0170279 ist eine Filtereinrichtung bekannt. Diese weist ein Filterelement auf, welches in einem Gehäuse angeordnet ist. Die Verbindung zwischen Gehäuse und Filterelement erfolgt über eine definierte Verzahnung bzw. in geometrischer Ausgestaltung der Endscheibe des Filterelements. Ein Nachteil bei der bekannten Einrichtung besteht darin, dass eine definierte Zuordnung bestimmter Elementkonturen zu dem Gehäuse nicht möglich ist. So kann ohne weiteres ein Element in das Gehäuse eingebaut werden, welches nicht die erforderliche Kontur aufweist. Dies führt dazu, dass fehlerhafte Teile in das vorhandene Gehäuse eingebaut werden können. Ebenso können Teile eingebaut werden, die nicht die Anforderungen hinsichtlich der Filtrationseigenschaften erfüllen.

Aus der DE 44 02 836 ist beispielsweise bekannt, dass zumindest die richtige Verwendung geeigneter Austauschteile dadurch gewährleistet wird, dass das jeweilige Anbauteil nur nach dem Schloss - Schlüssel - Prinzip an das Aggregat anfügbar ist. Es besteht hier jedoch immer noch das Problem, dass eine eventuelle unsachgemäße Nutzung von Austauschteilen dazu führen kann, dass die Lebensdauer oder die Funktion der Aggregate herabgesetzt wird. Hierbei lassen sich die unsachgemäße Nutzung oder die Folgen nur sehr schwer oder gar nicht nachweisen und eine Fehlerbehebung ist relativ aufwendig.

Ferner ist aus der WO 01/52185 ein Verfahren zur Überwachung wartungsintensiver Austauschteile an einem Aggregat bekannt. Hier wird beispielsweise ein Speicherbaustein in Form eines Transponders an einem Filterelement angeordnet um die korrekte Verwendung, sowie gleichzeitig Filtereigenschaften zu übermitteln. Bei diesem Verfahren wird jedoch eine zusätzliche Auswerteeinheit für die Darstellung der Daten benötigt.

Der Erfindung liegt die Aufgabe zugrunde, eine Filtereinrichtung zu schaffen, die derart gestaltet ist, dass eine eindeutige Zuordnung zwischen Filtergehäuse und Filterelement möglich ist.

Diese Aufgabe wird ausgehend von dem Oberbegriff des unabhängigen Anspruchs 1 durch dessen kennzeichnenden Merkmale gelöst.

### Offenbarung der Erfindung

Der wesentliche Vorteil der Erfindung besteht darin, dass das Filterelement eine bestimmte Struktur aufweist. Diese Struktur steht mit einem Element am Gehäuse in einer Wirkverbindung. Ferner ist ein zwischengeschaltetes Element vorgesehen das bestimmte Öffnungen aufweist. Diese Öffnungen müssen von dem Filterelement und zwar von dessen Kontur durchdrungen werden, damit die Wirkverbindungen mit dem Gehäuse zustande kommt.

In einer Ausgestaltung der Erfindung weist die Kontur der Öffnungen eine bestimmte Form auf, die beispielsweise der Form eines graphischen Markenzeichens, eines Logos oder eines Schriftzuges entspricht. Damit wird die Möglichkeit geschaffen, bereits auf dem Filterelement vorhandene Kennzeichnungen als Kontur zu verwenden. Falls auf dem Filterelement noch keine Kennzeichnung vorgesehen war, besteht mit der Ausgestaltung der Erfindung die Möglichkeit, solche Kennzeichnungen anzubringen und gleichzeitig die erforderliche Kontur zu bilden.

Weiterbildungsgemäß ist das Filterelement ein Rundfilterelement mit einem im Wesentlichen zickzackförmig gestalteten Filtermittel. Eine der Endscheiben, die bei einem Rundfilterelement erforderlich sind, weist die äußere Struktur, bzw. die erforderliche Kontur auf.

Gemäß einer weiteren Ausgestaltung der Erfindung ist an dem Gehäuse ein Mitteldorn vorgesehen, an dem sowohl das zwischengeschaltete Element axial beweglich gelagert ist, als auch das Element, welches in Wirkverbindung mit der Endscheibe des Filterelements steht.

Weiterbildungsgemäß ist der Mitteldorn mit Führungsnuten ausgestattet. Die an dem Mitteldorn angeordneten Elemente weisen Zapfen auf, die in die Nuten eingreifen, sodass eine Bewegung sowohl des mittleren Elements als auch des in Wirkverbindung stehenden gehäusebezogenen Element über die Nuten möglich ist.

Eine weitere Ausgestaltung der Erfindung sieht vor, dass die Kontur an der Endscheibe axial gerichtete Erhöhungen aufweist. Diese Erhöhungen greifen durch die Öffnungen des zwischengeschalteten Elements durch, wobei das dem Gehäuse zugewandte Element Zapfen aufweist, die in die Kontur des zwischengeschalteten Elements passen. Bei einem Einbau eines Filterelements werden diese Zapfen aus den Öffnungen heraus bewegt und geben eine Relativ-Bewegung und zwar eine rotierende Relativ-Bewegung zwischen wenigstens zwei Elementen frei. Dadurch lässt sich das Filterelement aufgrund einer daraus resultierenden axialen Bewegung der beiden auf dem Mitteldorn angeordneten Elemente in die benötigte Endlage bringen. Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

- Figur 1: Eine Schnittdarstellung einer Filtereinrichtung,
- Figur 2 a) und b): die Ansicht eines zwischengeschalteten Elements,
- Figur 3 a) und b): ein dem Filtergehäuse zugeordnetes Element in zwei Ansich ten,
- Figur 4 a) und b): ein an dem Filtergehäuse anzuordnender Mitteldorn,
- Figur 5: die dreidimensionale Darstellung der wesentlichen Bestand teile einer Filtereinrichtung.

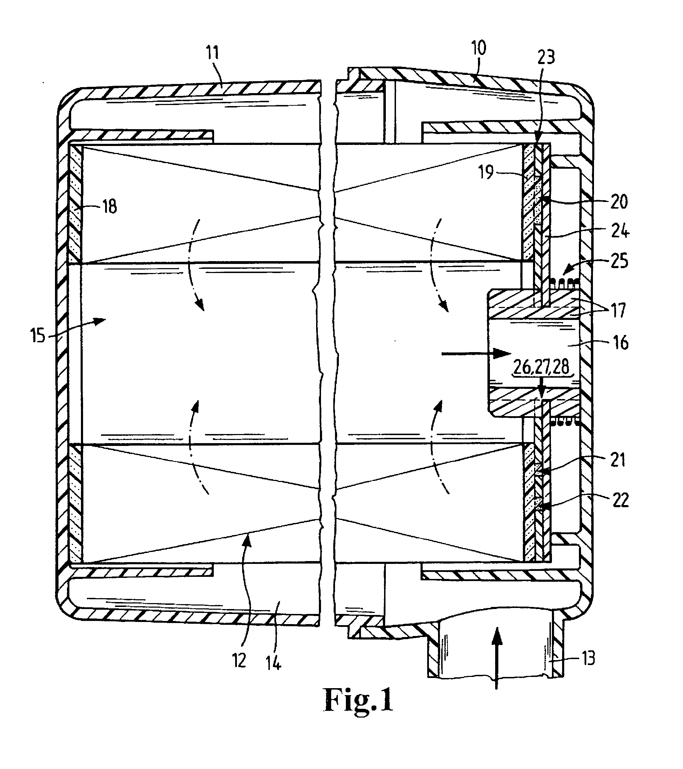

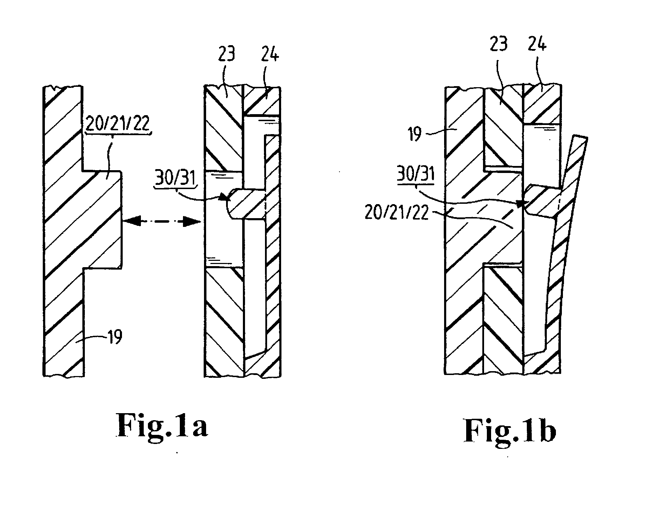

Die Darstellung gemäß Figur 1 zeigt ein Filtergehäuse 10, welches beispielsweise aus Kunststoff besteht und eine Aufnahme für ein Filterelement 12 besitzt.

Das Filtergehäuse 10 ist mit einem Gehäusedeckel 11 verschlossen. Das zu filtrierende Medium, beispielsweise Luft, strömt über den Rohlufteinlass 13 in den äußeren Rohluftbereich 14 des Filtergehäuses, strömt anschließend in radialer Richtung durch das zickzackförmig gefaltete Filterelement und durch die filterwirksame Schicht und verlässt gereinigt über den Innenraum 15 und die Öffnung 16 des Mitteldorns 17 die Filtereinrichtung. Das Filterelement 12 ist - wie bereits erwähnt - gefaltet und besteht aus einem Papier- oder Vliesmedium. Es weist an beiden Stirnseiten jeweils eine Endscheibe 18, 19 auf. Die Endscheiben bestehen beispielsweise aus thermoplastischen Kunststoffmaterial. Die Endscheibe 19 weist eine sich in axialer Richtung erstreckende Struktur auf. Bei der Struktur handelt es sich beispielsweise um Buchstaben, die zu definierten Erhöhungen bzw. Ausformungen 20, 21, 22 führen. Diese Erhöhungen greifen durch Öffnungen eines sogenannten zwischengeschalteten Elements 23 hindurch und stehen in unmittelbarer Wirkverbindung mit einem scheibenförmigen Element 24, welches dem Filtergehäuse 10 benachbart, axial beweglich angeordnet ist. Sowohl das zwischengeschaltete Element 23, als auch das scheibenförmige Element 24 weisen Zapfen an einem mittleren Durchbruch auf (in Figur 1 nicht dargestellt). Diese Zapfen greifen in Nuten des Mitteldorns 17 ein, sodass beide Elemente sowohl axial als auch radial über die entsprechende Ausformung der Nuten geführt werden. Dieser Aufbau ist in den weiteren Figuren beschrieben.

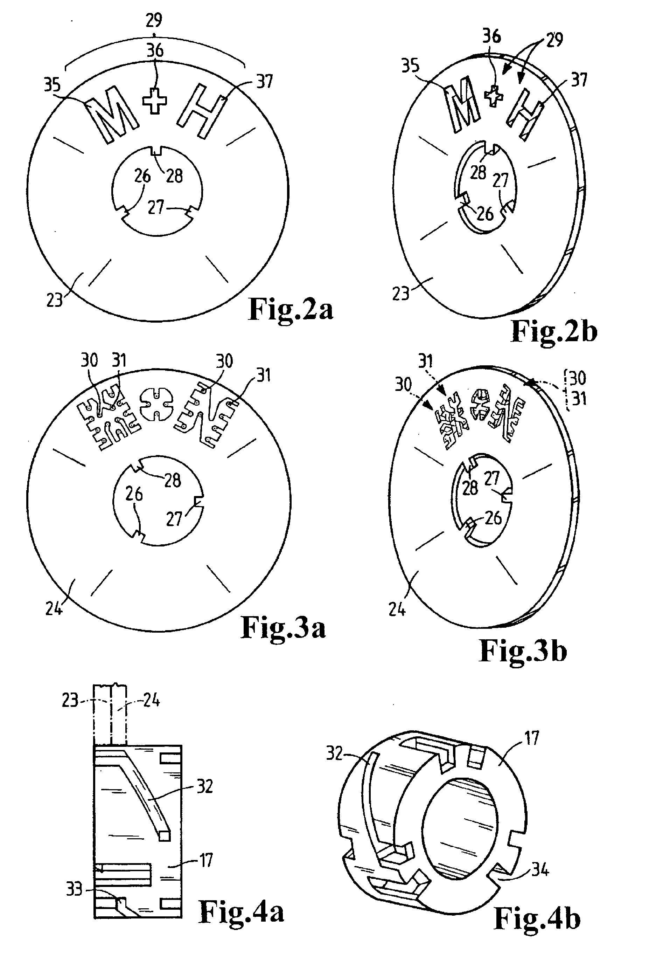

Eine Druckfeder 25 sorgt dafür, dass - sofern kein Filterelement in dem Gehäuse angeordnet ist - die beiden Elemente 23 und 24 an einem linksseitigen Anschlag anliegen (nicht dargestellt). Zum besseren Verständnis sind die einzelnen Scheiben in den Figuren 2 und 3 dargestellt.

Figur 2 a) zeigt das zwischengeschaltete Element 23.

Figur 2 b) zeigt ebenfalls das Element in einer perspektivischen Darstellung. Es ist ersichtlich, dass in dem Element 23 Durchbrüche 35, 36, 37 mit den Buchstaben 29 M, H und dem mathematischen "und" vorhanden sind. Außerdem ist das Element 23 in der mittleren Öffnung mit nach innen gerichteten Zapfen 26, 27, 28 versehen. Es wird vorausgesetzt, dass die Endscheibe 19 in Figur 1 Erhöhungen (20 ,21, 22) aufweist, die mit den auf dem zwischengeschalteten Element 23 angeordneten Durchbrüchen fluchten und damit in diese Durchbrüche eingreifen können.

Figur 3 a) und 3 b) zeigt das scheibenförmige Element 24. Auch dieses weist nach innen gerichtete Zapfen 26, 27, 28 auf. Ferner besitzt das Element 24 federnd angeordnete und sich aus der Ebene der Scheibe heraus erstreckende zapfenförmige Ansätze 30, 31, sowie eine Vielzahl weiterer Anätze, die ebenfalls federnd und zwar in axialer Richtung angeordnet sind. Sofern das Element 23 auf dem Element 24 aufliegt, greifen in der lagerichtigen Position die Ansätze in den Schriftzug des Elements 23 ein und verhindern eine Relativdrehbewegung zwischen den beiden Scheiben. Nur wenn mit der Endscheibe 19 und den Erhöhungen auf der Endscheibe bzw. Ausformungen 20 die Ansätze 30/31 in axialer Richtung weggedrückt bzw. aus den Buchstaben des Elements 23 herausgedrückt werden, besteht die Möglichkeit, dass sich beide Elemente 23 und 24 relativ zueinander verdrehen lassen. Dies bedeutet, dass die Endscheibe 19 sozusagen den Schlüssel darstellt, mit welchem das Schloss, bestehend aus den Scheiben 23 und 24, entriegelt werden kann.

Eine wichtige Rolle bei der Entriegelung spielt außerdem noch der Mitteldorn 17, der in Figur 4 a) und b) dargestellt ist. Dieser Mitteldorn weist drei am Umfang verteilt angeordnete Nuten 32, 33, 34 auf, die zur Führung der Zapfen 26 bis 28 dienen. Sofern sich kein Filterelement in dem Gehäuse gemäß Figur 1 befindet, liegen die beiden Elemente 23 und 24 in der in Figur 4 a) schematisch angedeuteten Position. Der Eingriff der Endscheibe 19 in die beiden Elemente bewirkt, dass sich das Element 24 in die schräg verlaufenden Nutbereiche hinein bewegt und aufgrund der Entriegelung durch die axiale Bewegung des Filterelements bis jeweils zu den Enden der Nut die in Figur 4 a) rechts seitlich zu erkennen sind, verschieben lässt.

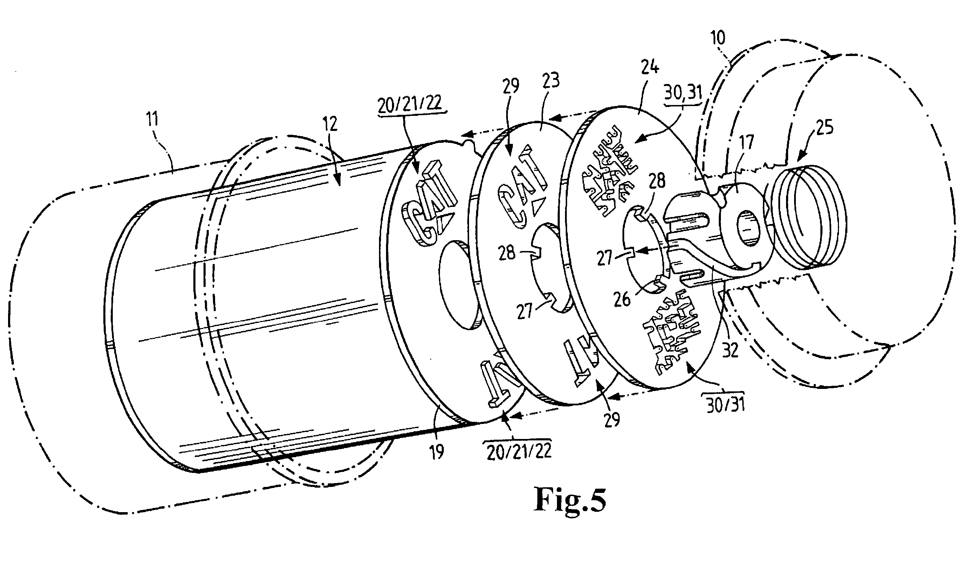

Figur 5 zeigt in Explosionsdarstellung nochmals die einzelnen Elemente. Gleiche Teile sind mit gleichen Bezugszeichen versehen. In das Filtergehäuse 10 wird die Druckfeder 25 mit dem Mitteldorn 17 eingebaut. Auf dem Mitteldorn werden die beiden Elemente 23 und 24 aufgesteckt und axial gegen ein Heranbewegen in Richtung des Filterelements 12 gesichert. Bei dem Filterelement 12 bzw. der Endscheibe 19 ist auf der Außenseite das Logo ( Ausformungen 20, 21, 22) , beispielsweise des Herstellers, erhöht dargestellt und weist beispielsweise eine Höhe von 5mm auf. Wird das Filterelement in das Gehäuse eingebracht, ragt dieses Logo in die Aussparung des zwischengeschalteten Elements 23, welches 5mm Stärke aufweist. Hinter dieser Scheibe befindet sich das scheibenförmige Element 24 mit den entsprechenden zapfenförmigen Ansätzen 30 bis 31. Durch die an dem Element 24 in der Mitte der Scheibe angebrachten Nocken 26, 27, 28 in Kombination mit dem Mitteldorn 17 der in der Nut 32 (Fig. 4a) die schiefe Ebene aufweist, ist zur Erreichung der Endlage des Filterelements zwingend eine Drehbewegung erforderlich. Diese Drehbewegung wird allerdings zunächst durch das Eingreifen der Zapfen in der Kontur des Logos des Elements 23 verhindert, da dieses ebenfalls die Zapfen 26, 27, 28 aufweist, die nur eine lineare Bewegung zulassen. Erst wenn die Ansätze 30, 31 und weitere durch die Maske des Elements 23 hindurch vom hervorstehenden Logo des Filterelements betätigt werden, ist diese Blockade aufgehoben. Durch das, nun durch Drehung mögliche Ausweichen des Elements 24 lässt sich nun der gesamte Mechanismus in die für das Filterelement benötigte Endlage bringen.

## Patentansprüche

1. Filtereinrichtung insbesondere zur Filtration von Flüssigkeiten oder Gasen bestehend aus einem öffenbaren Gehäuse (10), einem in dem Gehäuse angeordneten Filterelement (12), wobei das Filterelement wenigstens ein, zumindest teilweise die äußere Struktur abdeckendes Element (19) aufweist und am Gehäuse wenigstens ein mit dem die äußere Struktur abdeckenden Element (19) in Wirkverbindung stehendes Element (24) aufweist, **dadurch gekennzeichnet, dass** ein zwischengeschaltetes Element (23) vorgesehen ist, welches derart mit Öffnungen (35-37) versehen ist, dass eine Wirkverbindung zwischen den beiden Elementen (19, 24) nur dann zustande kommt, wenn eine Kontur des filterabdeckenden Elements (19) der Kontur der Öffnungen (35-37) weitesgehend entspricht.

2. Filtereinrichtung nach Anspruch 1, **dadurch gekennzeichnet, dass** die Kontur der Öffnungen (35-37) der Kontur eines Markenzeichens entspricht.

3. Filtereinrichtung nach Anspruch 1 oder 2, **dadurch gekennzeichnet, dass** das Filterelement (12) ein Rundfilterelement ist mit einem im Wesentlichen zickzackförmig gefalteten Filtermittel und wobei dieses an den Stirnseiten mit Endscheiben (18, 19) versehen ist und eine der Endscheiben als das, die äußere Struktur abdeckendes Element (19) gestaltet ist.

4. Filtereinrichtung nach Anspruch 3, **dadurch gekennzeichnet, dass** an der, der entsprechend gestalteten Endscheibe zugewandten Innenkontur des Gehäuses (10) ein Mitteldorn (17) vorgesehen ist und an diesem Mitteldorn (17) das mit der Endscheibe (19) des Filterelements (12) in Wirkverbindung stehende Element (24) und das zwischengeschaltete Element (23) axial bewegbar gelagert ist.

5. Filtereinrichtung nach Anspruch 4, **dadurch gekennzeichnet, dass** der Mitteldorn (17) Führungsnuten (32-34) aufweist und die an diesem Mitteldorn gelagerten Elemente Zapfen (26-28) aufweisen, welche in die Nuten eingreifen und wobei die Wirkverbindung zwischen den drei Elementen eine Bewegung der beiden an dem Mitteldorn (17) gelagerten Elemente (23, 24) zulässt.

6. Filtereinrichtung nach Anspruch 5, **dadurch gekennzeichnet, dass** die Endscheibe (19) am Filterelement (12) mit axial gerichteten Erhöhungen (35-37) ausgestattet ist und diesen Erhöhungen (35-37) Aussparungen an dem zwischengeschalteten Element (23) hinsichtlich der Kontur entsprechen und wobei sich unmittelbar hinter dem zwischengeschalteten Element das dem Gehäuse zugewandte Element (24) liegt, welches mit Zapfen (30, 31) versehen ist, die in die Kontur (35, 36, 37) des zwischengeschalteten Elements (24) passen und wobei diese Zapfen (30, 31) durch das Filterelement bei einer axial gerichteten Bewegung aus dem zwischengeschalteten Element (24) bewegt werden können, wodurch sich das Filterelement (12) aufgrund einer axialen Bewegung der beiden auf dem Mitteldorn (17) angeordneten Elemente in die benötigte Endlage bringen lässt.

## Claims

1. Filter device more especially for the filtration of liquids or gases, the said filter device comprising an openable housing (10), a filter element (12) that is disposed in the said housing, wherein the filter element includes at least one member (19) that covers the outer structure at least partially and on the housing at least one member (24) that is in operative connection with the member (19) that is covering the outer structure, **characterised in that** there is provided an interposed member (23), which is provided in such a manner with openings (35 - 37) that an operative connection between the two members (19, 24) only occurs when a contour of the member (19) that covers the filter corresponds to the greatest possible extent with the contour of the openings (35 - 37).

2. Filter device according to claim 1, **characterised in that** the contour of the openings (35 - 37) corresponds to the contour of a trademark.

3. Filter device according to claim 1 or 2, **characterised in that** the filter element (12) is a round filter element with a filtering medium that is folded substantially in a zigzag-shaped manner and wherein the said filtering medium is provided with end discs (18, 19) at the end faces and one of the end discs is in the form of the member (19) that covers the outer structure.

4. Filter device according to claim 3, **characterised in that** a central mandrel (17) is provided on the inside contour of the housing (10) that faces the correspondingly configured end disc, and the member (24) that is in operative connection with the end disc (19) of the filter element (12) and the interposed member (23) are mounted on the said central mandrel (17) so as to be axially displaceable.

5. Filter device according to claim 4, **characterised in that** the central mandrel (17) includes guide grooves (32 - 34) and the members that are mounted on the said central mandrel include pins (26 -28), which engage in the grooves, and wherein the operative connection between the three members permits a movement of the two members (23, 24) that are mounted on the central mandrel (17).

6. Filter device according to claim 5, **characterised in that** the end disc (19) on the filter element (12) is provided with axially directed elevations (35 - 37) and recesses on the interposed member (23) correspond with the said elevations (35 - 37) with regard to the contour and wherein the member (24) that faces the housing is situated directly behind the interposed member, the said member (24) being provided with pins (30, 31), which fit into the contour (35, 36, 37) of the interposed member (24), and wherein the said pins (30, 31) can be moved out of the interposed element (24) by the filter element with an axially directed movement, the filter element (12) thereby being moved into the required end position on account of an axial movement of the two members that are disposed on the central mandrel (17).

## Revendications

1. Filtre, particulièrement pour la filtration de liquides ou de gaz, composé d'un logement (10) pouvant être ouvert, composé d'un élément filtrant (12) placé dans le logement, l'élément filtrant présentant au moins un élément (19) recouvrant au moins partiellement la structure extérieure et sur le logement au moins un élément (24) en relation de coopération avec l'élément (19) recouvrant la structure extérieure,
**caractérisé en ce qu'**
un élément intercalé (23) est muni d'ouvertures (35-37), telles qu'une relation de coopération entre les deux éléments (19, 24) n'est réalisée que lorsqu'un contour de l'élément (19) recouvrant le filtre correspond le plus possible au contour des ouvertures (35-37).

2. Filtre selon la revendication 1,
**caractérisé en ce que**
le contour des ouvertures (35-37) correspond au contour d'un signe.

3. Filtre selon la revendication 1 ou 2,
**caractérisé en ce que**
l'élément filtrant (12) est un élément filtrant rond avec un moyen de filtration plié en zigzag, celui-ci étant muni sur les faces frontales de disques d'extrémité (18, 19) dont l'un est formé comme l'élément (19) recouvrant la structure extérieure.

4. Filtre selon la revendication 3,
**caractérisé en ce que**
le contour intérieur du logement (10) tourné contre le disque d'extrémité formé de manière correspondante, comporte un dôme central (17) sur lequel l'élément (24) coopérant avec le disque d'extrémité (19) de l'élément filtrant (12) et l'élément intercalé (23) sont placés de manière mobile axialement.

5. Filtre selon la revendication 4,
**caractérisé en ce que**
le dôme central (17) présente des rainures de guidage (32-34) et les éléments placés sur ce dôme central présentent des tenons (26-28) qui s'engagent dans les rainures, la coopération entre les trois éléments permettant un mouvement des deux éléments (23, 24) placés sur le dôme central (17).

6. Filtre selon la revendication 5,
**caractérisé en ce que**
le disque d'extrémité (19) sur l'élément filtrant (12) est muni de bossages dirigés axialement (35-37) et des évidements sur l'élément intercalé (23) correspondent à ces bossages (35-37) par rapport au contour, l'élément (24) tourné contre le logement reposant directement derrière l'élément intercalé et étant muni de tenons (30, 31) qui s'adaptent dans le contour (35, 36, 37) de l'élément intercalé (23), ces tenons (30, 31) pouvant être déplacés à travers l'élément filtrant lors d'un mouvement dirigé axialement hors de l'élément intercalé (23), moyennant quoi l'élément filtrant (12), en raison d'un mouvement axial des deux éléments montés sur le dôme central (17), peut être amené dans la position finale nécessaire.
